# EUROPEAN PATENT APPLICATION

(11) **EP 2 733 954 A1**
(43) Date of publication of application: **21.05.2014**
(21) Application number: 13191715.5
(22) Date of filing: 06.11.2013
(51) Int. Cl.: H04N 21/431, H04N 21/4786, H04N 5/445

(54) **Display apparatus and method for delivering message thereof**

(30) Priority: 15.11.2012 KR 20120129622
(71) Applicant: Samsung Electronics Co., Ltd, Gyeonggi-do 443-742 (KR)
(72) Inventor: Bae, Hee-jeong, Gyeonggi-do (KR); Kwon, Yong-hwan, Gyeonggi-do (KR); Seo, Jang-won, Seoul (KR); Choi, Myung-kwan, Gyeonggi-do (KR); Choi, Yoo-jin, Seoul (KR); Hwang, Woo-seok, Seoul (KR)
(74) Representative: Brandon, Paul Laurence

(57) **Abstract**

A method for transmitting a message in the display apparatus includes, when a command is input from a user, displaying a user interface (UI) for generating a message, registering message information including message contents and an object to receive the message using the UI, and when the object to receive the message is identified, outputting the message contents.

## Description

### BACKGROUND

### 1. Field of the Invention

Apparatuses and methods consistent with exemplary embodiments relate to a display apparatuses and methods for delivering a message, and more particularly, to delivering a message to a specific user.

### 2. Description of the Related Art

Recently, a display apparatus has been developed that provides various smart functions such as the function of searching information, the function of making a recommendation, and the function of communication. In particular, a single display apparatus performs various functions, and thus becomes an apparatus that can be used by various family members.

However, a related art display apparatus is only capable of providing communication with outside (for example, a video call), and does not provide the function of communication between family members. That is, although a display apparatus such as a television (TV) is used by all of the family members, the display apparatus does not perform the function of delivering a message between the family members, causing inconvenience.

Accordingly, a method to allow family members to exchange messages between them using a display apparatus is needed.

### SUMMARY

Exemplary embodiments may address at least the above problems and/or disadvantages and other disadvantages not described above. Also, exemplary embodiments are not required to overcome the disadvantages described above, and an exemplary embodiment may not overcome any of the problems described above.

One or more of exemplary embodiments provide a display apparatus which registers message information including the contents and the receiving end of a message using a message generating user interface (UI), and if the receiving end is recognized afterwards, outputs the contents of the message to the receiving end, and a method for delivering a message thereof.

In accordance with an aspect of an exemplary embodiment, there is provided a method for transmitting a message in a display apparatus including: when a predetermined command is input from a user, displaying a UI for generating a message, registering message information including message contents and an object to receive a message using the UI for generating a message, and when the object to receive a message is recognized, outputting the message contents.

The method may further include, after registering the message information, displaying a new message when power of the display apparatus is turned on for a first time.

The outputting may include, when a plurality of objects are recognized and an object except for an object to receive a message is included in the plurality of objects, displaying a guidance message informing existence of the message first.

The outputting may include, when a user command regarding output of a message is input through the guidance message, outputting the message contents.

The outputting may include, when a plurality of objects to receive a message are recognized, displaying a UI for selecting message information regarding each of the plurality of objects to receive a message, and when message information of one of the Uls is selected, outputting message contents of the selected message information.

The outputting may include, when the object to receive a message is recognized while an image is displayed after the message information is registered, displaying a guidance message informing that there is a message on one portion of a display screen where the image is displayed, and when a user command regarding output of a message is input through the guidance message, outputting the message contents.

The outputting may include, when power of a display apparatus is turned off after the message information is registered, displaying message information regarding the object to receive a message in a form of slide, and when one of the message information in the form of slide is selected according to a user, outputting message contents of the selected message information.

The recognizing may include recognizing the object to receive a message using at least one of face recognition, voice recognition, pin number recognition, fingerprint recognition, and eyeball recognition.

The UI for generating a message may include a plurality of object images for selecting the object to receive a message, and the registering may include, when at least one of a plurality of object images in the UI for generating a message is selected, registering an object corresponding to the at least one of the selected object image as the object to receive a message.

The registering may include registering the object to receive a message through voice recognition or input of a text.

The message contents may include at least one of an image message, a voice message and a text message.

In accordance with an aspect of an exemplary embodiment, there is provided a display apparatus including a display configured to display an image and a UI, an input unit configured to receive a user command, a storage configured to store message information, and a controller which is configured to, when a predetermined command is input from a user through the input unit, control the display to display a UI for generating a message, register message information including message contents and an object to receive a message in the storage according to a user command input using the UI for generating a message, and when the object to receive a message is recognized, control the display to display the message contents.

The controller, when power of the display apparatus is turned on for a first time after the message information is registered, may control the display to display a new message.

The controller, when a plurality of objects are recognized and an object except for an object to receive a message is included in the plurality of objects, may control the display to display a guidance message informing existence of the message first.

The controller, when a user command regarding output of a message is input through the guidance message, may control the display to display the message contents.

The controller, when a plurality of objects to receive a message are recognized, may control the display to display a UI for selecting message information regarding each of the plurality of objects to receive a message and to display message contents of the selected message information.

The controller, when the object to receive a message is recognized while an image is displayed after the message information is registered, may control the display to display a guidance message informing that there is a message on one portion of a display screen where the image is displayed, and when a user command regarding output of a message is input through the guidance message, to display the message contents.

When power of a display apparatus is turned off after the message information is registered, power may be applied to a component for recognizing the object to receive a message, and the controller, when power of a display apparatus is turned off after the message information is registered, may control the display to display message information regarding the object to receive a message in a form of slide, and when one of the message information in the form of slide is selected according to a user, to display message contents of the selected message information.

The controller may recognize the object to receive a message using at least one of face recognition, voice recognition, pin number recognition, fingerprint recognition, and eyeball recognition.

The UI for generating a message may include a plurality of object images for selecting the object to receive a message, and the controller, when at least one of a plurality of object images in the UI for generating a message is selected, may register an object corresponding to the selected object image as the object to receive a message.

The controller may register the object to receive a message through voice recognition or input of a text.

The message contents may include at least one of an image message, a voice message and a text message.

### BRIEF DESCRIPTION OF THE DRAWINGS

The above and/or other aspects will become more apparent by describing certain exemplary embodiments with reference to the accompanying drawings, in which:

FIG. 1 is a block diagram illustrating configuration of a display apparatus according to an exemplary embodiment;

FIG. 2 is a block diagram illustrating configuration of a display apparatus in detail according to an exemplary embodiment;

FIGS. 3, 4, and 5 are views illustrating various Uls for generating a message according to an exemplary embodiment;

FIGS. 6, 7, and 8 and 9 are views illustrating various Uls for delivering a message according to an exemplary embodiment; and

FIG. 10 is a flowchart of a method for delivering a message according to an exemplary embodiment.

### DETAILED DESCRIPTION

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

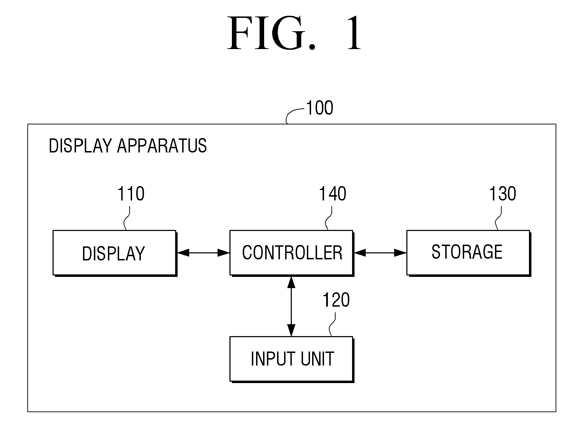

FIG. 1 is a block diagram illustrating configuration of a display apparatus 100 according to an exemplary embodiment. As illustrated in FIG. 1, the display apparatus 100 includes a display 110, an input unit 120, a storage 130, and a controller 140. The display apparatus 100 according to an exemplary embodiment may be a smart television, but it is only an example. The display apparatus 100 may include a monitor, a projection television, a tablet PC, a notebook PC, and a smart phone.

The display 110 outputs image data under the control of the controller 140. In particular, the display 110 may display various Uls to register message information or to transmit message information. In addition, if a message is an image message or a text message, the display apparatus 100 may display the message.

The input unit 120 receives a user command to control the display apparatus 100. The input unit 120 may receive a user command to register message information or to confirm message information.

The input unit 120 may include a remote controller, but it is only an example. That is, the input unit 120 may include another input apparatus to control the display apparatus 100 such as a touch panel and/or a pointing device.

The storage 130 stores various data and programs to control the display apparatus 100. In particular, the storage 130 may store message information including message contents and an object information for receiving the message.

The controller 140 controls operations of the display apparatus 100 according to a user command input through the input unit 120. In particular, if a predetermined user command is input through the input unit 120, the controller 130 controls the display 110 to display a UI for generating a message. Subsequently, the controller 140 registers message information including message contents and an object, i.e., a recipient, to receive the message in the storage 130 using a user command which is input through the UI for generating a message. Once an object to receive a message is identified, the controller 140 controls the display 110 to display message contents.

Specifically, if a predetermined user command (for example, a specific button and/or a specific voice command) is input, the controller 140 may control the display 110 to display the UI for generating a message. The UI for generating a message may include a plurality of object images to select an object to receive a message.

Subsequently, the controller 140 may register message information according to a user command input through the UI for generating a UI. The message information may include an object to receive a message, a message type and message contents. For example, if at least one of the plurality of object images in the UI for generating a message is selected through the input unit 120, the controller 140 may register an object corresponding to the object image selected as an object to receive a message. The operations of selecting at least one image from the plurality of object images in the UI for generating a message and registering the selected image as an object to receive a message are only examples, and an object to receive a message may be selected through voice recognition or input of a text.

The controller 140 may recognize an object to receive a message included in the registered message information. In this case, the controller 140 may recognize an object to receive a message using at least one of face recognition, voice recognition, pin number recognition, fingerprint recognition, and eyeball recognition, implemented by sensors and components included in a detector 300.

Once an object to receive a message is recognized, the controller 140 may output message contents regarding the object to receive a message. In this case, if the message is a text or an image, the controller 140 may output message contents through the display 110, and if the message is a voice, the controller 140 may output message contents through an audio output (not shown).

In addition, if a plurality of objects is detected and objects other than the objects to receive a message are included in the plurality objects, the controller 140 may control the display 110 to display a guidance message informing the existence of a message first and, if a user command regarding the output of the message is input through the guidance message, to display the message contents.

Further, if a plurality of objects to receive a message is detected, the controller 140 may control the display 110 to display a UI for selecting message information regarding each of the plurality of objects. If message information of one of the Uls is selected through the input unit 120, the controller 140 may control the display 110 to display message contents of the selected message information.

In addition, if an object to receive a message is detected while an image (for example, a broadcasting image) is displayed after the message information is registered, the controller 140 may control the display 110 to display a guidance message informing about the existence of a message on one portion of a display screen where the image displayed. Subsequently, if a user command regarding the output of the message is input through the guidance message, the controller 140 may control the display to display the message contents regarding the object to receive a message.

Further, suppose that the power is applied only to components of the detector 300 responsible for detecting, recognizing, and/or identifying an object to receive a message (for example, an imager, a voice input unit, etc.) even when the power of a display apparatus is turned off after message information is registered. In this case, if the object to receive a message is recognized after message information is registered and the display apparatus is turned off, the controller 140 displays message information regarding an object to receive a message as a slide, and if one piece of the message information in the slide is selected according to a user command, the controller 140 may control the display 110 to display the message contents of the selected message information. In an exemplary embodiment, the detector 300 may include at least one of the imager 260, audio input 270, input unit 280, storage 250, and controller 290, but this is not limiting and the detector may include other sensors or components. Meanwhile, even before an object to receive a message is recognized, if power of the display apparatus 100 is turned on for the first time after message information is registered, the controller 140 may control the display 110 to display a newly-registered message. In this case, the controller 140 may display only summarized information of a message (for example, a thumbnail image, a person who leaves the message, an object to receive the message, and so on) instead of the entire message contents of the new message.

As described above, a user may perform communication with family members using the display apparatus 100.

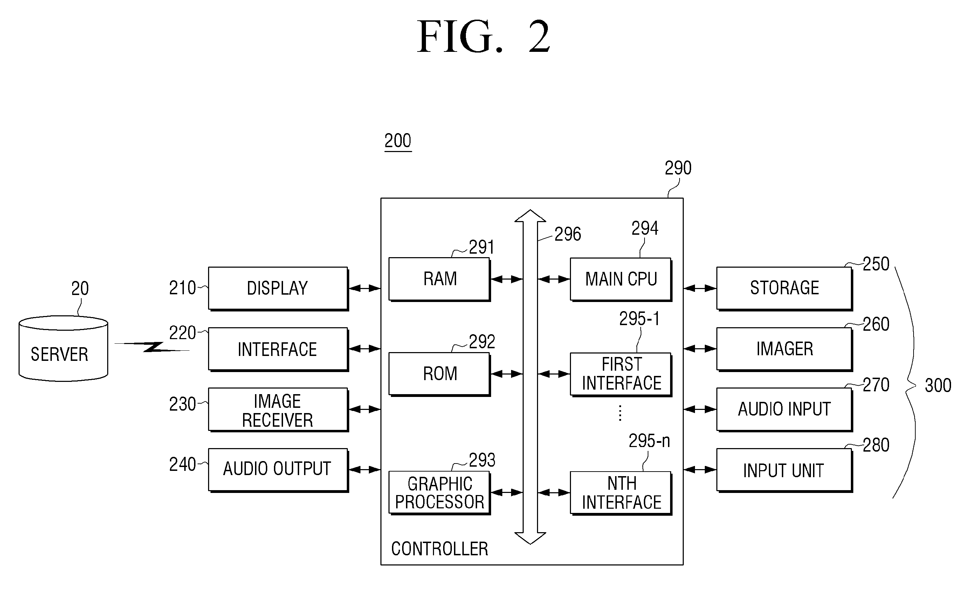

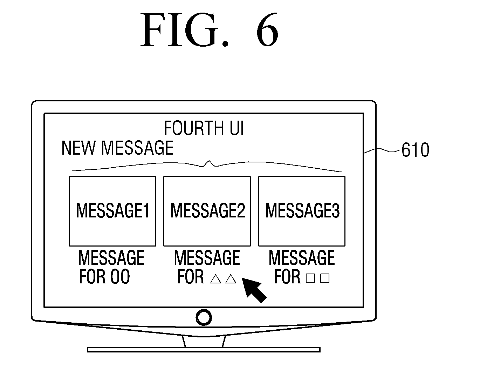

Hereinafter, an exemplary embodiment is described in greater detail with reference to FIGS. 2 to 9. FIG. 2 is a block diagram illustrating configuration of a display apparatus 200 in detail according to an exemplary embodiment. As illustrated in FIG. 2, the display apparatus 200 includes a display 210, a communication interface 220, an image receiver 230, an audio output 240, a storage 250, a imager 260, an audio input 270, an input unit 280, and a controller 290.

FIG. 2 illustrates the display apparatus 200 as an apparatus having various functions such as the function of communication, the function of receiving broadcasting, the function of reproducing a video, the function of performing a displaying operation and illustrates various components comprehensively. Therefore, depending on various configurations, some of the components illustrated in FIG. 2 may be omitted or changed, or other components may be further added.

The display 210 displays at least one of a video frame, which is generated by a video processor (not shown) which processes image data received from the image receiver 230, and various screens generated by a graphic processor 293. In particular, the display 210 may display a UI for registering or transmitting message information generated by the graphic processor 293. In addition, if an object to receive a message is recognized, the display 210 may display message contents regarding the object to receive a message.

The communication interface 220 communicates with various types of external apparatuses or an external server 20 according to various types of communication methods. The communication interface 220 may include various communication chips such as a WiFi chip, a Bluetooth chip, a Near Field Communication (NFC) chip, a wireless communication chip, and so on. The WiFi chip, the Bluetooth chip, and the NFC chip may perform communication according to a WiFi method, a Bluetooth method, and an NFC method, respectively. For example, the NFC chip is a chip which operates according to an NFC method which uses 13.56 MHz band among various RF-ID frequency bands such as 135 kHz, 13.56 MHz, 433 MHz, 860 to 960 MHz, 2.45 GHz, and so on. In the case of the WiFi chip or the Bluetooth chip, various connection information such as SSID and a session key may be transmitted and/or received first for communication connection and then, various information may be transmitted and/or received. The wireless communication chip is a chip which performs communication according to various communication standards such as IEEE, Zigbee, third Generation (3G), third Generation Partnership Project (3GPP), Long Term Evolution (LTE) and so on.

The image receiver 230 receives image data from various sources. For example, the image receiver 230 may receive broadcast data from an external broadcasting station, and may receive image data from an external apparatus (for example, a DVD apparatus).

The audio output 240 outputs various audio data processed by an audio processor (not shown) and/or various alarming sounds or a voice message. If message information is a voice message, once an object to receive the message is recognized, the audio output 240 may output a voice message regarding the object to receive the message.

The storage 250 stores various modules to drive the display apparatus 200. For example, the storage 250 may store software including a base module, a sensing module, a communication module, a presentation module, a web browser module, and a service module. The base module is a basic module which processes a signal transmitted from hardware elements included in the display apparatus 200 and transmits the processed signal to an upper layer module. The sensing module collects information from various sensors, and analyzes and manages the collected information, and may include a face recognition module, a voice recognition module, a motion recognition module, an NFC recognition module, and so on. The presentation module is a module to compose a display screen, and may include a multimedia module to reproduce and output multimedia contents and a UI rendering module to perform UI and graphic processing. The communication module is a module to perform communication with outside. The web browser module is a module to access a web server by performing web browsing. The service module is a module including various applications to provide various services.

As described above, the storage 250 may include various program modules, but some of the various program modules may be omitted, changed, or added according to the type and characteristics of the display apparatus 200. For example, the display apparatus 200 may include a tablet PC, the base module may include a determination module to determine a GPS-based location, and the sensing module may include a sensor to sense the operation of a user.

The imager 260 is disposed on one portion of the display apparatus 200 (for example, on an upper bezel) and photographs a user. In particular, if an object to receive a message is recognized using face recognition, the imager 260 may output an image including at least one of the photographed users to the controller 290. In this case, the imager 260 may be formed integrally with the display apparatus 200 or separately from the display apparatus 200. The separate imager 260 may be connected to the display apparatus 200 via cable or wirelessly.

The audio input 270 receives a voice uttered by a user. The audio input 270 converts an input audio signal to an electrical signal and outputs it to the controller 290. For example, the audio input 270 may include a microphone. In addition, the audio input 270 may be formed integrally with the display apparatus 200 (all-in-one) or separately from the display apparatus 200. The separate audio input 270 may be connected to the display apparatus 200 via cable or wirelessly.

The input unit 280 receives a user command to control operations of the display apparatus 200 and may include a remote controller, but this is only an example. The input unit 280 may include another input apparatus which may control the display apparatus 200, such as a touch panel, a pointing device, etc. In addition, the input unit 280 may receive a user command to register or confirm a message.

The controller 290 controls operations of the display apparatus 200 using various programs, and/or modules stored in the storage 250.

The controller 290, as illustrated in FIG. 2, includes a RAM 291, a ROM 292, a graphic processor 293, a main CPU 294, a first to an nth interfaces 295-1 and 295-n, and a bus 296. The RAM 291, the ROM 292, the graphic processor 293, the main CPU 294, and the first to the nth interfaces 295-1 and 295-n may be interconnected through the bus 296.

The ROM 292 stores a set of commands for system booting. If a turn-on command is input and thus, power is supplied, the main CPU 294 copies operating system (OS) stored in the storage 250 into the RAM 291 according to a command stored in the ROM 292, and boots a system by executing the OS. Once the booting is completed, the main CPU 294 copies various application programs stored in the storage 250 into the RAM 291, and performs various operations by executing the application programs copied into the RAM 291.

The graphic processor 293 generates a screen including various items such as an icon, an image, a text, etc., using an operation unit (not shown) and a rendering unit (not shown). The operation unit computes property values such as a coordinates, a shape, a size, and a color of the items to be displayed according to the layout of a screen using a control command received from the input unit 280. The rendering unit generates screens of various layouts including items based on the property values computed by the operation unit. The screens generated by the rendering unit are displayed in a display area of the display 210.

The main CPU 294 accesses the storage 250 and performs booting using the OS stored in the storage 250. In addition, the main CPU 294 performs various operations using various programs, contents, data, etc. stored in the storage 250.

The first to the nth interfaces 295-1 and 295-n are connected to the above-described various components. One of the interfaces may be a network interface which is connected to an external apparatus via a network.

If a predetermined command from a user is input through the input unit 280, the controller 290 controls the display 210 to display a UI for generating a message and registers message information including message contents and an object to receive the message in the storage 250 according to a user command input using the UI for generating a message, and an object to receive a message is recognized, the controller 290 controls the display 210 to display the message contents.

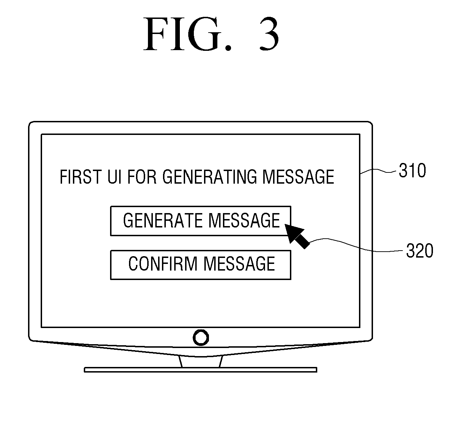

With reference to FIG. 3, the controller 290 may control the display 210 to display a first UI 310 for generating a message. For example, if an icon corresponding to an application for generating a message is selected, a user voice command including a predetermined word or phrase (for example, "generate a message") is input, or a predetermined button on a remote controller (for example, a button for generating a message) is selected, the controller 290 may display a UI for generating a message as illustrated in FIG. 3.

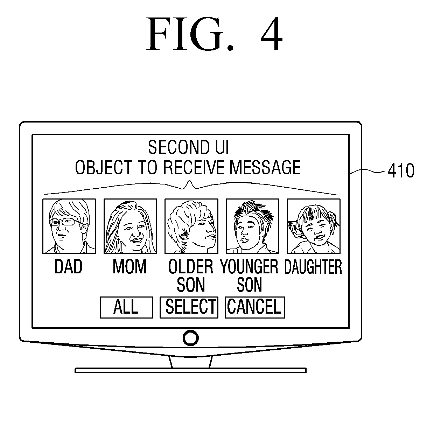

If a command to "generate a message" is input using a first UI 310 for generating a message and a pointer 320, the controller 290 may display a second UI 410 for selecting an object to receive a message as illustrated in FIG. 4. In this case, the second UI 410 for selecting an object to receive a message may include a plurality of images of objects. For example, the second UI 410 for selecting an object to receive a message may include an image corresponding to "dad", an image corresponding to "mom", an image corresponding to "older son", an image corresponding to "younger son", and an image corresponding to "daughter" or other people, referred to here as objects.

As illustrated in FIG. 4, if a user command is input using the second UI 410, the controller 290 may select more than one object to receive a message. For example, if images corresponding to "dad", "older son" and "younger son" are selected through the second UI 410, by using, for example, a pointing device, the controller 290 may select "dad", "older son" and "younger son" as objects to receive a message.

In addition, the controller 290 may select all of the pre-stored object images as the objects to receive a message. For example, the controller 290 may select the members of entire family as the objects to receive a message, by selecting a button "all."

In an exemplary embodiment, an object to receive a message is selected using object images displayed in the second UI 410, but this is only an example. An object to receive a message may be selected through voice recognition or input of a text. For example, a user may utter "dad", "older son", and "younger son", and the controller 290 may select the objects to receive a message by recognizing the user voice input through the audio input 270. Alternatively, if a user inputs "dad", "older son", and "younger son" directly using a remote controller or a keyboard, the controller 290 may select an object to receive a message.

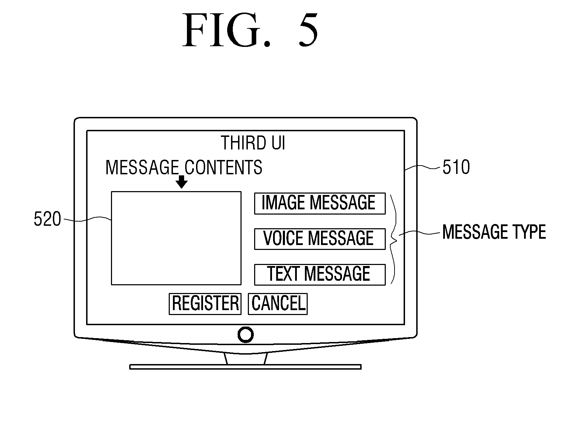

If at least one object to receive a message is selected using the second UI 410 for selecting an object to receive a message, the controller 290 may display a third UI 510 for inputting a message type and message contents as illustrated in FIG. 5. For example, a user may select one of an image message, a voice message, and a text message as a message type through the third UI 510. If an image message is selected, the controller 290 may display an image photographed by the imager 260 on a portion 520 of the third UI 510, and if a text message is selected, the controller 290 may display the text input by a user on the portion 520 of the third UI 510.

If an object to receive a message, message contents, and a message type are selected using the Uls 310, 410, 510, the controller 290 may register and store the message information including the object to receive a message, the message contents, and the message type in the storage 250, by selecting a button "register" shown on the third UI 510.

In an exemplary embodiment, the message information is stored in the storage of the display apparatus 200, but it is only an example. The message information may be stored in an external memory connected to the display apparatus 200 or in the external server 20.

If the power of the display apparatus 200 is turned on for the first time after message information is registered, the controller 290 may display a new message on a fourth UI 610 which has been registered before the power is turned on (that is, a message that is registered but not confirmed). In this case, the controller 290 may include only summarized information of a message (for example, a thumbnail image, an object to receive a message, a message writer, and so on) instead of the entire message contents.

If an object to receive a message is recognized, the controller 290 may output a message regarding the recognized subject to receive a message. In this case, if the message type is an image or a text, the controller 290 may output the message contents through the display 210, and if the message type is an audio, the controller 290 may output the message contents through the audio output 240.

In addition, if a plurality of objects to receive a message are registered with respect to one piece of message information, and one of the plurality of objects to receive a message is recognized, the controller 290 may control the display 210 to display registered message contents. For example, if the members of the entire family are registered as objects to receive a message regarding the piece of message information, and one of the family members is recognized, the controller 290 may control the display 210 to display registered message contents.

The controller 290 may recognize an object to receive a message using various methods. For example, the controller 290 may recognize an object (person) to receive a message by recognizing the face of an object photographed by the imager 260. Specifically, the controller 290 may analyze at least one of symmetric structure of an object, appearance (for example, the shape and location of eyes, nose and mouth), hair, eye color, movement of face muscle to extract characteristics of a face and compare the extracted characteristics with pre-stored image data in order to recognize the face of the object. Alternatively, the controller 290 may recognize an object to receive a message by analyzing an object voice input to the audio input 270. Specifically, the controller 290 may recognize an object to receive a message by comparing object voice data input through the audio input 270 with the voice data stored in database. In addition, the controller 290 may recognize an object through various methods such as password recognition, fingerprint recognition, eyeball recognition, and so on.

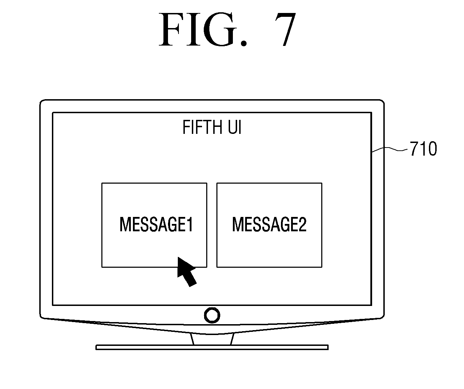

In particular, if there is a plurality of messages regarding an object to receive a message, the controller 290 may control the display 210 to display a fifth UI 710 for selecting one of the plurality of messages as illustrated in FIG. 7.

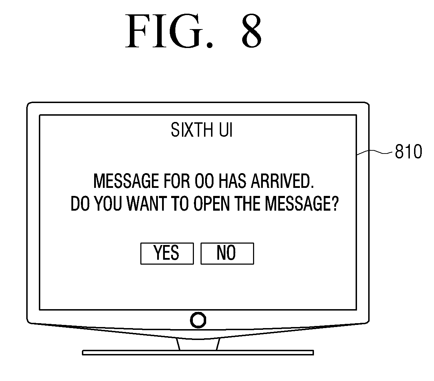

If a plurality of objects are recognized and objects other than an object to receive a message are included in the plurality of objects, the controller 290 may control the display 210 to display a guidance message to inform that a message exists. For example, if a plurality of objects are included in an image photographed by the imager 260 and some of the plurality of objects are not those objects which are set to receive a message, the controller 290 may control the display 210 to display a guidance message on a sixth UI 810 to inform about the message and confirm whether a message is to be opened as illustrated in FIG. 8.

Subsequently, if a user command regarding output of a message is input through the sixth UI 810, by selecting a button "yes," the controller 290 may control the display 210 to display the message contents.

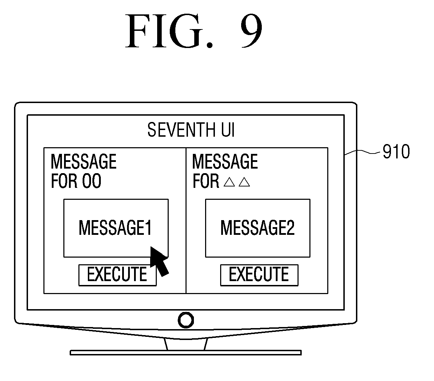

In addition, if objects to receive a message are recognized, the controller 290 may display a seventh UI 910 for selecting message information regarding each of the plurality of objects to receive a message as illustrated in FIG. 9. If one of the messages displayed on the seventh UI 910 is selected through the input unit 280, the controller 290 may control the display 210 to display the message contents of the selected message. For example, if "a message for OO" is selected on the seventh UI 910 illustrated in FIG. 9, the controller 290 may control the display 210 to display message contents for "OO".

In addition, if an object to receive a message is recognized while an image (for example, a broadcast image) is displayed after message information is registered, the controller 290 may display a guidance message informing that there is a message on one portion of a display screen where the image is displayed. For example, if an object to receive a message is recognized while a broadcasting image is displayed, the controller 290 may display the guidance message on the sixth UI 810 as illustrated in FIG. 8. In FIG. 8, the guidance message is displayed at the center as a pop-up window, but this is only an example. The guidance message may be displayed as a bar on one portion (for example, on the upper portion) of the display screen.

If a user command regarding output of a message is input through the sixth UI 810, the controller 290 may control the display 210 to display the message contents.

If the power of the display apparatus 200 is turned off after message information is registered and then, an object to receive a message is recognized, the controller 290 may control the display 210 to display message information regarding the object to receive a message in the form of a slide. If one piece of the message information in the slide form is selected according to a user command input through the input unit 280, the controller 290 may control the display 210 to display message contents of the selected message information. In this case, the display apparatus 200 may apply power to the components for recognizing an object to receive a message (for example, the imager 260, the audio input 270, and the controller 290) even if power is turned off so that an object to receive a message can be recognized.

As described above, the display apparatus 200 may provide the function of transmitting a message for communication between family members. In particular, the display apparatus 200 may prevent other persons except for family members from viewing message contents and thus, allows more intimate communication between family members.

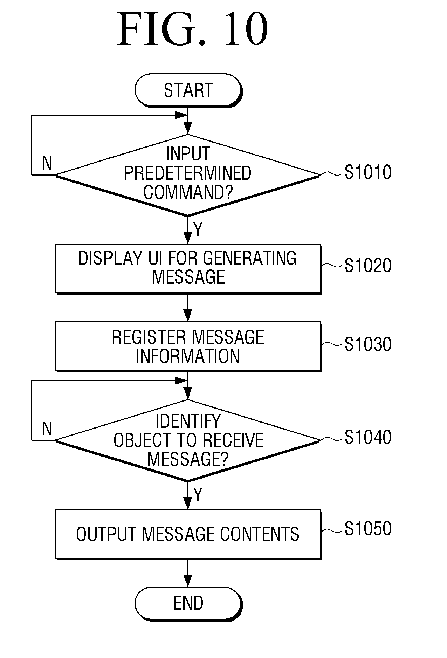

Hereinafter, the method for transmitting message in the display apparatus 200 is described in detail with reference to FIG. 10.

First of all, the display apparatus 200 determines whether a predetermined command is input (operation S1010). The predetermined command is a user command to display a UI for generating a message, and may be one of a user command to select an icon corresponding to an application for generating a message, a user voice command including a predetermined word or phrase (for example, "generate a message"), and/or a user command to select a predetermined button formed on a remote controller.

In operation S1010, if it is determined that a predetermined command is input, the display apparatus 200 displays a UI for generating a message (operation S1020). The UI for generating a message may include a plurality of object images for selecting an object to receive a message.

Subsequently, the display apparatus 200 registers message information according to a user command using the UI for generating a message (operation S1030). Specifically, the display apparatus 200 may select at least one object to receive a message using the plurality of object images of the UI, and may generate a message type (for example, an image, a voice and a text) and message contents using the UI.

After the message information is registered, the display apparatus 200 identifies an object to receive a message (operation S1040). In this case, the display apparatus 200 may recognize an object to receive a message using various methods such as face recognition, voice recognition, fingerprint recognition, pin number recognition, and eyeball recognition.

In operation S1040, if it is determined that an object to receive a message is recognized the display apparatus 200 outputs the message contents (operation S1050). If the message type is an image or a text, the display apparatus 200 outputs the message contents through the display 210, and if the message type is a voice, the display apparatus 200 may output the message contents through the audio output 240.

Accordingly, a user may communicate with family members through a display apparatus using the above-described method for transmitting a message.

The message transmitting method of a display apparatus according to various exemplary embodiments may include a program provided to the display apparatus.

Specifically, if a user's predetermined command is input, a non-transitory computer-readable medium may store a program for displaying a UI for generating a message; registering message contents and an object to receive a message using the UI for generating a message; and outputting the message contents once the object to receive a message is recognized.

The non-transitory computer-readable medium may include a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disk, USB, memory card, and/or ROM.

The foregoing exemplary embodiments and advantages are merely exemplary and should not be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for transmitting a message in a display apparatus (100, 200), the method comprising:
when a predetermined command is input from a user, displaying a first user interface (UI) for generating a message;
registering message information including message contents and an object to receive the message using the first UI for generating the message; and
when the object to receive the message is recognized, outputting the message contents.

2. The method as claimed in claim 1, wherein the outputting comprises:
displaying a new message when a power of the display apparatus (100, 200) is turned on for a first time after being turned off after the message information is registered.

3. The method as claimed in claim 1 or claim 2, wherein the outputting comprises, when a plurality of objects is detected and an object not to receive the message is included in the plurality of objects, displaying a guidance message informing existence of the message, prior to the outputting the message.

4. The method as claimed in claim 3, wherein the outputting comprises, when a user command regarding output of the message is input through the guidance message, outputting the message contents.

5. The method as claimed in any one of claim 1 to claim 4, wherein the outputting comprises:
when a plurality of objects to receive the message is recognized, displaying a second UI for selecting messages regarding the plurality of objects to receive the message; and
when the message information of one of the messages on the second UI is selected, outputting the message contents of the selected message information.

6. The method as claimed in any one of claim 1 to claim 5, wherein the outputting comprises, when the object to receive the message is recognized while an image is displayed after the message information is registered, displaying a guidance message informing that there is the message on a portion of a display screen where the image is displayed; and
when a user command regarding output of the message is input through the guidance message, outputting the message contents.

7. The method as claimed in any one of claim 1 to claim 6, wherein the outputting comprises, when a power of the display apparatus (100, 200) is turned off after the message information is registered, displaying the message information regarding the object to receive the message in a form of slide; and
when one piece of the message information in the form of slide is selected according to the object, outputting the message contents of the selected message information.

8. The method as claimed in any one of claim 1 to claim 7, wherein the recognizing comprises recognizing the object to receive the message using at least one of face recognition, voice recognition, pin number recognition, fingerprint recognition, and eyeball recognition.

9. The method as claimed in any one of claim 1 to claim 8, wherein the first UI for generating the message includes a plurality of object images for selecting the object to receive the message,
wherein the registering comprises, when at least one of the plurality of object images in the first UI for generating a message is selected, registering the object corresponding to the at least one of the selected object image as the object to receive the message.

10. The method as claimed in any one of claim 1 to claim 9, wherein the registering comprises registering the object to receive the message through voice recognition or an input of a text.

11. The method as claimed in any one of claim 1 to claim 10, wherein the message contents comprise at least one of an image message, a voice message, and a text message.

12. A display apparatus (100, 200) comprising:
a display unit (100, 210) configured to display an image and a user interface (UI);
an input unit (120, 270, 280) configured to receive a user command;
a storage unit (130) configured to store message information; and
a controller (140, 290) which is configured to, when a predetermined command is input from a user through the input unit, control the display unit to display the UI for generating a message, register message information including message contents and an object to receive the message in the storage unit according to the user command input using the UI for generating a message, and when the object to receive the message is recognized, control the display unit to display the message contents.

13. The display apparatus (100, 200) as claimed in claim 12, wherein the controller (140, 290) is configured to control the display unit (110, 210) to display a new message when the power is turned on for a first time after being turned off after the message information is registered.

14. The display apparatus (100, 200) as claimed in claim 12 or claim 13, wherein, when a plurality of objects is detected and an object not to receive the message is included in the plurality of objects, the controller (140, 290) is configured to control the display unit (110, 210) to display a guidance message informing existence of the message prior to displaying the message contents.

15. The display apparatus (100, 200) as claimed in claim 14, wherein, when the user command regarding output of the message is input through the guidance message, the controller (140, 290) is configured to control the display unit (110, 210) to display the message contents.
